(19) Europäisches Patentamt
European Patent Office
Office européen des brevets

(11) Veröffentlichungsnummer: **0 055 989**
**A2**

(12) **EUROPÄISCHE PATENTANMELDUNG**

(21) Anmeldenummer: 82100563.4

(22) Anmeldetag: 24.02.81

(51) Int. Cl.³: **C 09 K 3/34**
C 09 B 1/02, C 09 B 1/20
C 09 B 1/32, C 09 B 1/50
C 09 B 1/54, C 09 B 1/56
C 09 B 43/22

(30) Priorität: 26.02.80 DE 3007198

(43) Veröffentlichungstag der Anmeldung: 14.07.82 Patentblatt 82/28

(84) Benannte Vertragsstaaten: CH DE FR GB IT LI NL SE

(60) Veröffentlichungsnummer der früheren Anmeldung nach Art. 76 EPÜ: 0 034 832

(71) Anmelder: SIEMENS AKTIENGESELLSCHAFT Berlin und München
Postfach 22 02 61
D-8000 München 22(DE)

(72) Erfinder: Möller, Alexander, Dr.
Steinesweg 7
D-6464 Linsengericht 4(DE)

(72) Erfinder: Scherowsky, Günther, Dr.
Winklerstrasse 18b
D-1000 Berlin 33(DE)

(54) **Flüssigkristall mit einem eingelagerten pleochroitischen Anthrachinon-Farbstoff und Verfahren zur Herstellung des Farbstoffes.**

(57) Flüssigkristall mit einem eingelagerten pleochroitischen Anthrachinon-Farbstoff und Verfahren zur Herstellung de Farbstoffes.

Der Farbstoff hat die allgemeine Formel

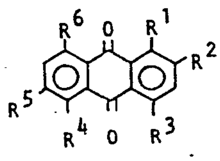

Solche Flüssigkristallmischungen werden vor allem bei Flüssigkristallanzeigen auf der Basis der "guest-host"-Effektes verwendet.

Die Reste $R^1$, $R^3$, $R^4$, $R^6$ stehen für H, OH, $OCH_3$, $NH_2$, $NO_2$, $NHCH_3$. Es gilt

$R^2 = R^5 =$ a) 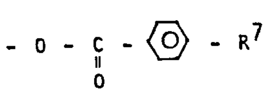 oder

b) 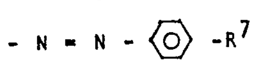 oder

c) 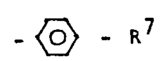 ,

wobei $R^7$ ein Alkyl-, Aryl-, Amino-, Alkylamino, Diakylamino, Arylamino-, Alkyloxy-, Aryloxy-Rest ist, mit der Maßgabe, daß 1,5-Diamino-4,8-dihydroxy-3,7-di-(4-methoxyphenyl)-anthrachinon ausgenommen ist.

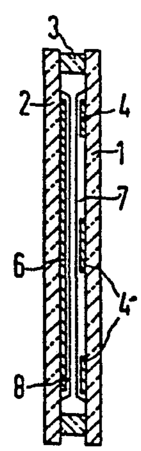


EP 0 055 989 A2

Croydon Printing Company Ltd.

SIEMENS AKTIENGESELLSCHAFT
Berlin und München

Unser Zeichen
VPA 80 P 8014 E 01

Flüssigkristall mit einem eingelagerten pleochroitischen Anthrachinon-Farbstoff und Verfahren zur Herstellung des Farbstoffes.

Die Erfindung betrifft einen mit einem Anthrachinon dotierten Flüssigkristall gemäß dem Oberbegriff des Anspruchs 1 sowie Herstellungsverfahren für diesen Farbstoff. Derartige Flüssigkristallmischungen und Herstelltechniken sind Gegenstand der älteren, nachveröffentlichten europäischen Patentanmeldung 00 26 004.

Bereits seit einiger Zeit arbeitet man intensiv an der Realisierung der sogenannten "absorptiven" Flüssigkristallanzeige, bei der in der Flüssigkristallschicht ein pleochroitischer Farbstoff eingelagert ist (Appl.Phys. Lett. 13 (1968) 91). Ein solches Display zeichnet sich vor allem dadurch aus, daß es über einen großen Betrachtungswinkelbereich verfügt und ohne Polarisatoren auskommt. Wenn trotz dieser attraktiven Eigenschaften Flüssigkristallanzeigen mit Farbstoffzusatz bis heute noch nicht voll konkurrenzfähig geworden sind, so liegt dies vor allem daran, daß man noch keinen Farbstoff entwickeln konnte, der sich nicht nur in ausreichender Menge löst und über lange Lager- und Betriebszeiten hinweg stabil ist, sondern auch einen akzeptablen Kontrast liefert.

Der Darstellungskontrast hängt vor allem davon ab, inwieweit die Flüssigkristallmoleküle ihren jeweiligen Orientierungszustand auf die eingebetteten Farbstoffmoleküle übertragen können. Kennzeichnend für den Ordnungsgrad des Farbstoffs ist die Größe $S = 1/2(3\langle\cos^2\vartheta\rangle - 1)$, die durch Mittelung über die Winkel $\vartheta$ zwischen den einzelnen Farbstoffmolekülen und dem Direktor der Flüssigkristallmatrix gewonnen wird.

Les 1 Lk/20.1.1982

BAD ORIGINAL

S nimmt im Idealfall, wenn alle Farbstoffmoleküle parallel zur Vorzugsrichtung der Flüssigkristallmoleküle liegen, den Wert 1 an und liegt in der Praxis deutlich darunter. (Die Berechnungsmöglichkeiten für S sowie die Zusammenhänge zwischen dem Ordnungsparameter und dem vom Betrachter wahrgenommenen Kontrast sind in IEEE Trans. on Electron Devices ED-24 (1977) 823 dargestellt.)

Einen hohen Ordnungsgrad haben bestimmte Azo-Farbstoffe, die beispielsweise in Electronics Lett. 12 (1976) 514 beschrieben werden. Es hat sich jedoch herausgestellt, daß gerade diejenigen Azo-Verbindungen, die die höchsten S-Werte (S = 0.79) und die größten Absorptionskoeffizienten aufweisen, schon nach wenigen 1000 h zerfallen und unter UV-Belastung rasch ausbleichen.

Relativ beständig sind Farbstoffe auf Anthrachinon-Basis, die deshalb auch schon frühzeitig auf ihre Eignung als Flüssigkristall-Additiv hin untersucht wurden. So werden bereits in der DE-AS 24 45 164 1,4-Alkylphenylamino-Anthrachinone sowie 1,4- und 1,8-Alkylamino-Anthrachinone erwähnt, die jedoch, soweit die Auslegeschrift hierüber Angaben enthält, nur schwache Bildkontraste bewirken. Substituiert man, wie in der DE-OS 28 15 335 vorgesehen, den Anthrachinon-Ring an seinen Positionen 1 und 4 bzw. 1 und 8 mit dem Rest $-N = CH-C_6H_4-X$ ($C_6H_4$ ist eine Phenylgruppe und X steht für eine Nitro-, Cyan-, Phenyl-, $C_{1-20}$-Alkyl-, $C_{1-20}$-Alkoxy- oder eine Di-$C_{1-4}$-Alkylamino-Gruppe), so kann man recht hohe Ordnungsgrade erhalten. Die in der DE-OS 28 15 335 genannten Spitzenwerte von 0,9 und darüber lassen sich allerdings, soweit die betreffenden Flüssigkristall/Farbstoff-Gemische nachgemessen wurden, nicht reproduzieren. Hinzukommt, daß diese Verbindungsklasse nur sehr wenige Farben liefert; die Anthrachinone

BAD ORIGINAL

mit den 1- und 4-ständigen Resten sind blau, die bei 1 und 8 substituierten Anthrachinone haben einen rötlichen Farbton. Ein größeres Farbenspektrum steht zur Verfügung, wenn man, wie in der Europäischen Offenlegungsschrift 0 00 21 04 vorgeschlagen, den Anthrachinon-Ring an seinen Positionen 1, 4 und 5 folgendermaßen substituiert: Bei 1 sitzt eine (substituierte oder modifizierte) Anilino-Gruppe, auf Position 4 befindet sich entweder Wasserstoff oder eine Hydroxyl-Gruppe, und der 5-ständige Rest ist im ersten Fall eine (substituierte oder modifizierte) Anilino-Gruppe und im zweiten Fall ein Wasserstoff. Diese Farbstoffklasse ist chemisch, vor allem fotochemisch, außerordentlich resistent, läßt sich aber nicht sonderlich gut orientieren; die S-Werte bleiben in aller Regel unter 0,7 und erreichen bestenfalls 0,71.

Der Erfindung liegt die Aufgabe zugrunde, Flüssigkristalle mit stabilen Anthrachinon-Zusätzen bereitzustellen, die in der Flüssigkristallsubstanz hinreichend löslich sind, dabei gut ausgerichtet werden und sich darüber hinaus durch einfache Änderung ihrer Struktur farblich variieren lassen. Diese Aufgabe wird durch Flüssigkristallmischungen mit den Merkmalen des Patentanspruchs 1 gelöst.

Die Moleküle der erfindungsgemäß vorgesehenen Farbstoff-Verbindungen, bei denen nunmehr die Positionen 2 und 6 bzw. damit äquivalente Stellen 3 und 7 des Anthrachinon-Ringes substituiert sind, haben eine sehr gestreckte, schlanke Form und lassen sich daher besonders einfach in die Wirtmatrix einpassen. Messungen haben ergeben, daß man mühelos S-Werte über 0,75 erzielen kann und daß diese Werte von der verwendeten Flüssigkristallmischung nur wenig abhängen. Die vorgeschlagenen Substanzen lassen sich ohne sonderlichen Aufwand und mit recht hohen Ausbeuten herstellen. Ihre Farbe läßt sich durch Wahl geeigneter Reste $R^2$ und $R^5$, die nicht nur den

BAD ORIGINAL

Anthrachinon-Ring verlängern sollen, sondern auch selbst Chromophore enthalten können, sowie durch Variationen der Reste $R^1$, $R^3$, $R^4$ und $R^6$ in weiten Grenzen verändern. Bei sämtlichen getesteten Farbstoffen ließ die Absorptionsfähigkeit auch nach längerer UV-Bestrahlung nur geringfügig nach.

Die Erfindung soll nun anhand von Ausführungsbeispielen unter Bezugnahme auf die beigefügte Figur näher erläutert werden.

Die Figur zeigt eine Flüssigkristallanzeige in einem Seitenschnitt. Das Display enthält zwei zueinander parallele Trägerplatten 1, 2, die über einen Rahmen 3 miteinander verbunden sind und auf ihren Innenseiten jeweils leitfähige Beläge (getrennt ansteuerbare Segmentelektroden 4, durchgehende Rückelektrode 6) sowie plattenparallel orientierende Schichten 7, 8 tragen. In der durch den Rahmen und die beiden Trägerplatten begrenzten Kammer befindet sich eine cholesterische Flüssigkristallsubstanz, der ein pleochroitischer Farbstoff beigemischt ist. Die Flüssigkristallschicht hat eine positive dielektrische Anisotropie und wird zwischen einer planar-cholesterischen und einer homöotrop-nematischen Orientierung geschaltet. Für weitere Einzelheiten wird auf J. Appl. Phys. 45 (1974) 4718 verwiesen.

Welcher unter den vorgeschlagenen Farbstoffen auszuwählen ist, hängt von den Anforderungen des konkreten Falles ab. Um einen Eindruck zu vermitteln, welche Eigenschaften die einzelnen Verbindungen der erfindungsgemäßen Klasse haben können, werden im folgenden einige repräsentative Beispiele detaillierter behandelt.

BAD ORIGINAL

Beispiel 1

1,5-Diamino-2,6-di-[trans-4-(4n-pentyl-cyclohexyl)-benzoyloxy]-anthrachinon

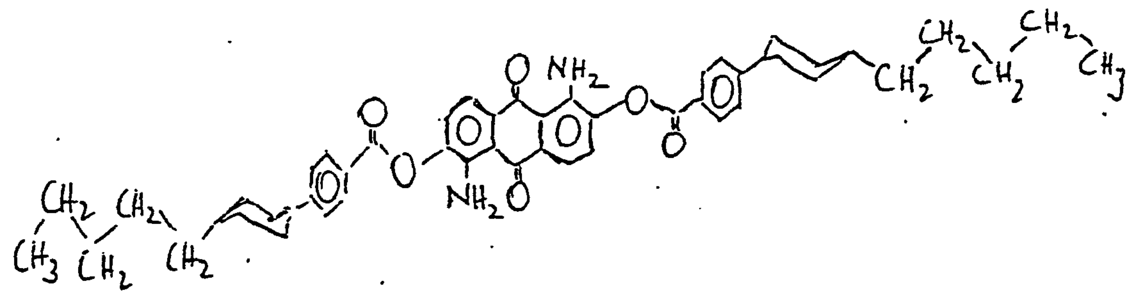

Herstellung:

Zu einer auf -20°C abgekühlten Lösung von 5ml Dimethylformamid und 12ml Acetonitril werden 2ml Oxalylchlorid, verdünnt mit 2ml Acetonitril getropft. Anschließend fügt man unter Rühren 2,3g (0,02 mol) Trans-4-(4n-pentyl-cyclohexyl)-benzoesäure hinzu. Nach kurzer Zeit tropft man bei -20°C 2,4g (0,01 mol) 2,6-Dihydroxy-1,5-dinitroanthrachinon, gelöst in 100ml Pyridin zu. Die Reaktionslösung erwärmt man danach auf Raumtemperatur und rührt 18h nach. Durch Zugabe von 2 n Natriumcarbonat-Lösung fällt man das Produkt aus, saugt ab und trocknet im Vakuum. (Ausbeute 51%). Schmelzpunkt 240°C (Zers.). -$\lambda_{max}$ (DMSO/Methanol 5:5) = 500nm. -$^1$H-NMR ($D_6$-DMSO): = 0,9 (t, J=5Hz, 6H, $CH_2\underline{CH_3}$), 1,1 - 1,4 (m, 32H, $-CH_2-$), 1,75 (s, br, 2H, $-CH_2\underline{CH}$ $-CH_2-$), 1,85 (s, br, 2H, $-CH_2-\underline{CH}-CH_2-$), 6,95 (d, J=8Hz, 2H), 7,35 (d, J=8Hz, 4H), 7,45 (d, J=8Hz, 2H), 7,85 (d, J=8Hz, 4H).

Beispiel 2

2,6-Di-[4-(p-N.N-dimethylanilino-azo)-benzoyloxy]-anthrachinon

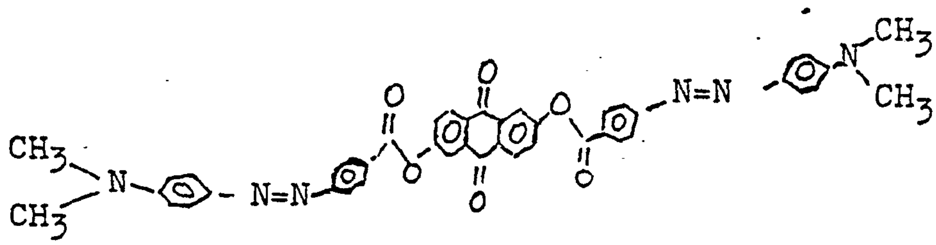

Synthese aus 4-(p-N.N-Dimethylanilino-azo)-benzoesäure und 2,6-Dihydroxy-anthrachinon nach der im Beispiel 1 angegebenen Methode (Ausbeute 34 %). Schmp. 270°C (Zers.). $\lambda_{max}$ ($CHCl_3$) = 450 nm. - $^1$H-NMR ($CF_3CO_2D$) $\delta$ = 3,65 (s, 12 H, $NCH_3$), 7,25 (d, J = 9 Hz, 4 H), 7,8-8,15 (m, 10 H), 8,35-8,7 (m, 8 H). S = 0,75 in RO TN 570.

Beispiel 3

2,6-Di-[4 -(4-Pentoxyphenylazo)-benzoyloxy]-anthrachinon

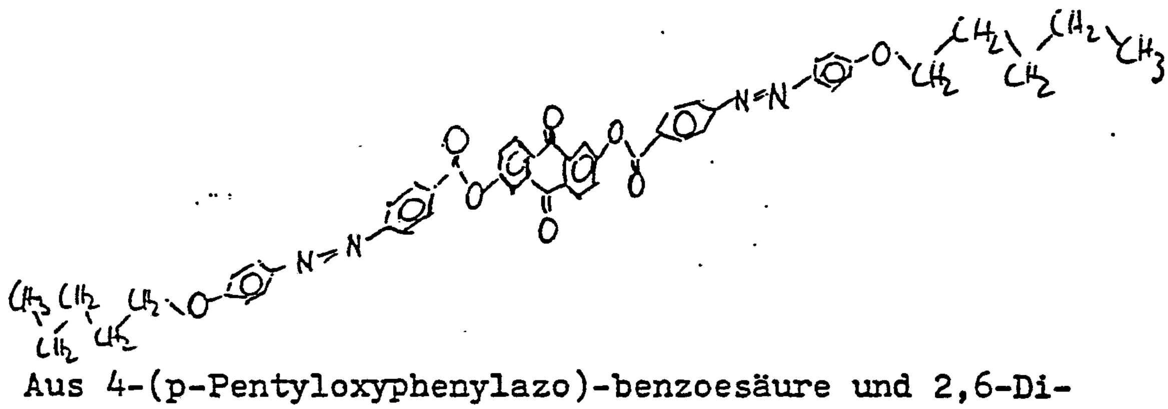

Aus 4-(p-Pentyloxyphenylazo)-benzoesäure und 2,6-Dihydroxy-anthrachinon nach der im Beispiel 1 angegebenen Methode (Ausbeute 63 %). Schmp. 200°C (Zers.). -$\lambda_{max}$ ($CHCl_3$) = 370 nm. - $^1$H-NMR ($CF_3CO_2D$): $\delta$ = 1,0 (t, J = 6 Hz, 6 H, $CH_2CH_3$), 1,55 (mc, 8 H, $CH_2CH_3$), 2,0 (mc, 4 H, $OCH_2$-$CH_2$), 4,45 (t, J = 8 Hz, 4 H, $OCH_2$), 7,35 (d, J = 9 Hz, 4 H), 7,8 (dd, J = 8 und 1 Hz, 2 H), 8,1-8,6 (m, 16 H). S = 0,70 in RO TN 570.

Beispiel 4

2,6-Di-(p-dimethylanilino-azo)-anthrachinon

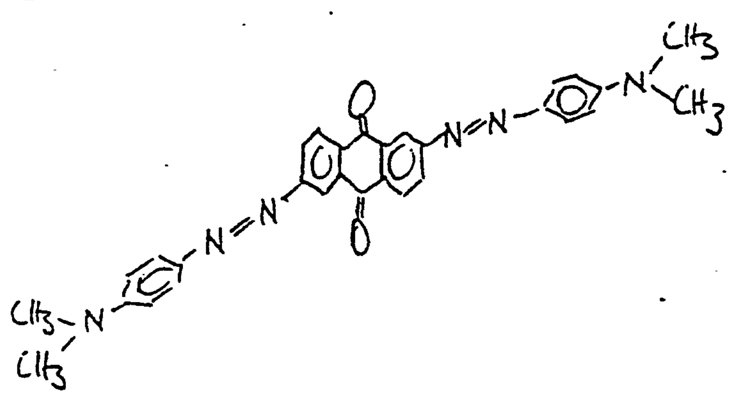

Synthese: 0,48 g (2 mmol) 2,6-Diaminoanthrachinon werden in 10 ml konz. $H_2SO_4$ gelöst und bei 10°C mit 0,3 g (4,4 mmol) Natriumnitrit diazotiert, 18 h nachgerührt und anschließend auf Eis gegossen. Das erhaltene Diazoniumsalz wird abgesaugt, in 10 ml 50proz. Schwefelsäure suspendiert und mit 0,48 (mmol) N, N-Dimethylanilin (gelöst in 10 ml 2 n Schwefelsäure) bei 15°C gekuppelt. Nach beendeter Reaktion neutralisiert man mit Natriumcarbonat, saugt den erhaltenen Niederschlag ab, trocknet ihn und chromatographiert an Kieselgel (Ausbeute 61 %). Schmp. 170°C (Zers.). - $\lambda_{max}$ ($CHCl_3$) = 510 nm. - $^1$H-NMR ($CF_3CO_2D$): $\delta$ = 3,7 (s, 12 H, $NCH_3$), 7,35 (d, J = 9 Hz, 4 H), 8,0-8,2 (m, 6 H), 8,45-8,65 (m, 4 H). S = 0,72 in RO TN 570.

Beispiel 5

2,6-Di-(4-pentoxyphenyl-azo)-anthrachinon

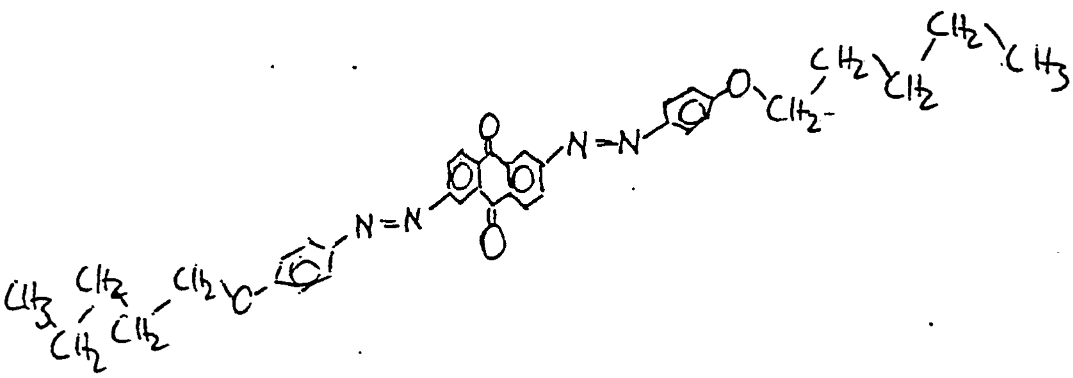

Die Diazotierung erfolgt analog der in Beispiel 4 beschriebenen Methode. Die Kupplung wird in alkalischem Medium mit der äquimolekularen Menge Phenol durchgeführt. Von dem erhaltenen Kupplungsprodukt wird das Natriumsalz mit überschüssigem Pentyljodid in Dimethylformamid verethert (Ausbeute 19 %). Schmp. 150°C (Zers.). - $\lambda_{max}$ ($CHCl_3$) = 350 nm. - $^1$H-NMR ($CF_3CO_2D$): $\delta$ = 1,0 (t, J = 5 Hz, 6 H, $CH_2\underline{CH_3}$), 1,5 (m, 8 H, $CH_2\underline{CH_2}\underline{CH_3}$), 2,0 (m, 4 H, $OCH_2\underline{CH_2}$), 4,5 (t, J = 7 Hz, 4 H, $OCH_2$), 7,45 (d, J = 9 Hz, 4 H), 8,5-8,65 (m, 8 H), 9,05 (d, J = 1 Hz, 2 H).

Beispiel 6

1,5-Diamino-4,8-dihydroxy-3,7-di(4-pentoxyphenyl)-anthrachinon

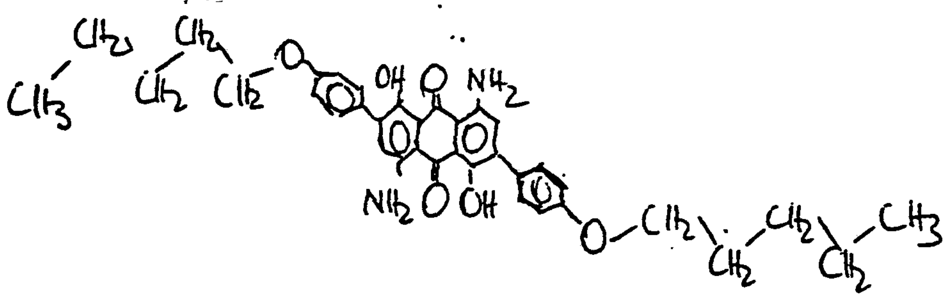

Synthese: 3,3 g (0,01 mol) 1,5 Dihydroxy-4,8-dinitro-anthrachinon werden bei 20°C in einem Gemisch aus 60 ml konz. Schwefelsäure und 5,02 g Borsäure gelöst. Nach Abkühlen auf -18°C tropft man innerhalb von 30' 3,28 g (0,02 mol) Phenylpentylether zu und rührt bei dieser Temperatur 1 h nach. Anschließend gießt man diese Mischung auf Eis und zerstört den Borsäureester durch 1 stündiges Erhitzen. Der erhaltene Niederschlag wird abgesaugt,neutral gewaschen und im Vakuum getrocknet. Man erhält 3,8 g eines Substanzgemisches, das einer nochmaligen Arylierung unterworfen wird. Man erhält 4,5 g Rohprodukt. 1,5 g dieses Rohproduktes werden mit 0,42 g (0,009 mol) Natriumborhydrid in Isopropanol reduziert. Nach Eingießen in Wasser zentrifugiert man und trocknet im Vakuum. Man erhält 1,2 g Produkt, aus dem durch chromatografieren an Kieselgel 0,2 g Diarylverbindung isoliert werden. Schmp. 180°C, $\lambda^1_{max}$ = 633 nm, $\lambda^2_{max}$ = 595 nm. $^1$H-NMR ($D_6$DMSO): $\delta$ = 0,9 (t, J = 7 Hz, 6 H, $CH_2$-$\underline{CH_3}$); 1,1-1,5 (m, 8 H, $\underline{CH_2}$-$\underline{CH_2}CH_3$), 1,6-1,85 (m, 4 H, o-$CH_2\underline{CH_2}$-), 4,05 (t, J = 7 Hz, 4 H, O-$\underline{CH_2}$), 7,05 (d, J = 8 Hz, 4 H, Ar-H), 7,2 (s, 2 H, Ar-H), 7,55 (d, J = 8 Hz, 4 H, Ar-H), 8,0 (s, br, 6 H, -$NH_2$, -OH), MS (190°C): m/e = 594 (1 % $M^+$), 432 (30 %, $C_{11}H_{14}O$). $S^1$ = 0,79, $S^2$ = 0,75.

Beispiel 7

1,5-Diamino-4,8-dihydroxy-2,6-diphenyloxy-anthrachinon

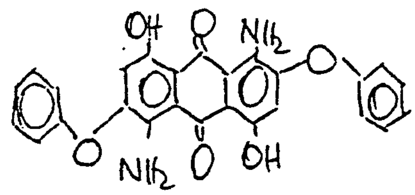

Schmp. 235°C. - MS (220°C): m/e = 454 (96 %, $M^+$). $\lambda^1_{max}$ (Aceton) = 590 nm, $\lambda^2_{max}$ (Aceton) = 620 nm.

In welcher Weise der Ordnungsparameter S von der Art und Größe der Farbstoffmoleküle sowie der Beschaffenheit der Flüssigkristallsubstanz beeinflußt wird, läßt sich nicht ohne weiteres erkennen. Immerhin haben die Farbstoffe in untereinander verwandten Flüüsigkristallgemischen, etwa der RO TN-Gruppe von Hoffmann-La Roche oder der ZLI-Gruppe von Merck, die Tendenz, sich um so besser zu ordnen, je höher der Klärpunkt der einzelnen Gruppenmitglieder liegt. Dies mag darauf zurückzuführen sein, daß bei Raumtemperatur die Flüssigkristallmoleküle selbst sauberer ausgerichtet sind, wenn die Mesophase bis zu höheren Temperaturen reicht.

10 Patentansprüche

1 Figur

Patentansprüche

1. Flüssigkristall mit einem eingelagerten pleochroitischen Anthrachinon-Farbstoff der allgemeinen Formel

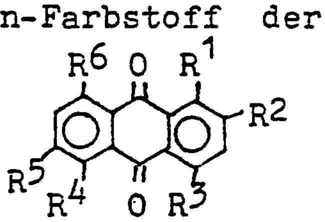

,

wobei die Reste $R^1$, $R^3$, $R^4$, $R^6$ für H, OH, $OCH_3$, $NH_2$, $NO_2$, $NHCH_3$ stehen, dadurch gekennzeichnet, daß

$R^2 = R^5 =$ a) 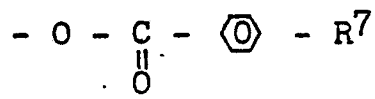 oder

b) 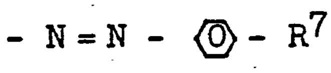 oder

c) 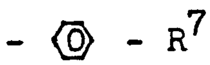 ,

wobei $R^7$ ein Alkyl-, Aryl-, Amino-, Alkylamino-, Dialkylamino-, Arylamino-, Alkyloxy-, Aryloxy-Rest ist, mit der Maßgabe, daß 1,5-Diamino4,8-dihydroxy-3,7-di-(4-methoxyphenyl)-anthrachinon ausgenommen ist.

2. Flüssigkristall nach Anspruch 1, dadurch gekennzeichnet, daß der eingelagerte Anthrachinon-Farbstoff ein 1,5-Diamino-2,6-di-[trans-4-(4n-pentyl-cyclohexyl)-benzoyloxy]-anthrachinon ist.

3. Flüssigkristall nach Anspruch 1, dadurch gekennzeichnet, daß der eingelagerte Anthrachinon-Farbstoff ein 2,6-Di-[4-(p-N.N-dimethylanilino-azo)-benzoyloxy]-anthrachinon ist.

4. Flüssigkristall nach Anspruch 1, dadurch gekennzeichnet, daß der eingelagerte Anthrachinon-Farbstoff ein 2,6-Di-[4-(4-Pentoxyphenylazo)-benzoyloxy]-anthrachinon ist.

5. Flüssigkristall nach Anspruch 1, dadurch gekennzeichnet, daß der eingelagerte Anthrachinon-Farbstoff ein 2,6-Di-(p-dimethylanilino-azo)-anthrachinon ist.

6. Flüssigkristall nach Anspruch 1, dadurch gekennzeichnet, daß der eingelagerte Anthrachinon-Farbstoff ein 2,6-Di-(4-pentoxyphenyl-azo)-anthrachinon ist.

7. Flüssigkristall nach Anspruch 1, dadurch gekennzeichnet, daß der eingelagerte Anthrachinon-Farbstoff ein 1,5-Diamino-4,8-dihydroxy-3,7-di(4-pentoxyphenyl)-anthrachinon ist.

8. Flüssigkristall mit einem eingelagerten 1,5-Diamino-4,8-Dihydroxy-2,6-diphenyloxy-anthrachinon.

9. Verfahren zur Herstellung eines Anthrachinon-Farbstoffs eines Flüssigkristalls gemäß einem der Ansprüche 2 bis 4, dadurch gekennzeichnet, daß man zunächst zu einer abgekühlten Lösung von Dimethylformamid und Acetonitril Oxalylchlorid, verdünnt mit Acetonitril, tropft, anschließend unter Rühren $R^7$-Benzoesäure hinzufügt, dann nach kurzer Zeit in abgekühlter Umgebung das entsprechende 2,6-Dihydroxyanthrachinon, gelöst in Pyridin, hinzufügt, danach die Reaktionslösung auf Raumtemperatur erwärmt und einige Stunden nachrührt, daraufhin durch Zugabe von Natriumcarbonat-Lösung das Produkt ausfällt, absaugt und schließlich im Vakuum trocknet.

10. Verfahren zur Herstellung eines Anthrachinon-Farbstoffes eines Flüssigkristalls gemäß den Ansprüchen 5 oder 6, dadurch gekennzeichnet, daß man zunächst 2,6-Diaminoanthrachinon in konzentrierter Schwefelsäure löst und bei leicht abgekühlter Umgebung mit Natriumnitrit diazotiert, einige Stunden nachrührt und anschließend auf Eis gießt, das erhaltene Diazoniumsalz absaugt,

mit Dimethylanilin oder Phenol kuppelt und - nach Alkylierung im Falle der Phenolkupplung - in üblicher Weise aufarbeitet, trocknet und schließlich chromatographiert.

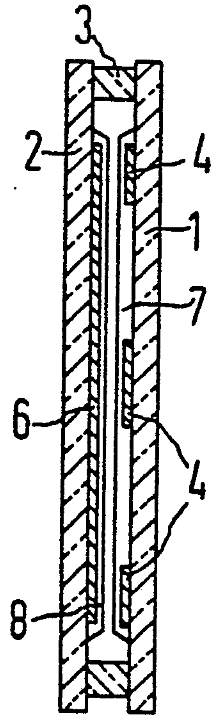
3
2
4
1
7
6
4
8